# EUROPEAN PATENT APPLICATION

(11) **EP 1 862 793 A1**
(43) Date of publication of application: **05.12.2007**
(21) Application number: 06114657.7
(22) Date of filing: 29.05.2006
(51) Int. Cl.: G01N 21/53, G01N 15/02

(54) **High throughput particle counter**

(71) Applicant: Biotest AG, 63303 Dreieich (DE)
(72) Inventor: Miers, David, Sparta, New Jersey 07871 (US)
(74) Representative: Ettmayr, Andreas

(57) **Abstract**

The particle counter (1) is equipped with a scroll pump (2) adapted to create a gas flow through the measurement chamber (6) with a maximum flow rate of at least 50 liters per minute. Light (10) scattered from particles entrained in the gas flow iscollected by an optical system (11). The product of the smallest diameter of the minimum aperture and the magnification amounts to at least 2 mm. Especially preferred is a minimum aperture with a smallest diameter of at least 2.5 mm and a magnification of at least 1.5. The optical system (11) images a projection of the measurement volume created by intersection of the gas flow and the beam of light (8) onto the active area (12) of the sensor module (13). The sensor module 13 contains a photomultiplier-tube (PMT). Both sensitivity and accuracy of the particle counter are improved using a larger aperture and greater magnification, which is made possible by use of the photomultiplier tube.

## Description

The present invention relates to particle counters, especially to particle counters comprising a pump for creating a flow of gas through the particle counter, the flow of gas carrying a particle load to be quantified, a measurement chamber having an inlet through which the flow of gas enters said measurement chamber and an outlet through which the flow of gas exits the measurement chamber, a light source, means for directing a beam of light emitted from the light source into the measurement chamber such that the beam of light traverses the flow of gas, sensor means for detecting light scattered by the particle load, and an optical system for imaging the scattered light onto an active area of the sensor means.

Particle counters of this type are well-known, for example from US 4,571,079. They are frequently used for determining the particle concentration in the ambient air of clean room environments.

Wherever a very low concentration of airborne particles is essential in order to avoid particle contamination which might render the products of costly processes useless - such as in semiconductor manufacturing, pharmaceutical production, micro- and nanofabrication, scientific clean room laboratories or the like - it is required to monitor the actual particle concentration continuously or at least regularly.

In order to achieve a measurement result representative for the ambient air the particle concentration of which is to be assessed, it is necessary to sample a certain minimum air volume. For example, the European Commission Guide to Good Manufacturing Practice requires a minimum sample volume of 1 cubic mater of air for cleanrooms of class A and class B and recommends the same sample volume for class C cleanrooms.

It is perspicuous that the maximum flow rate of sampled air a particle counter permits to pass its measurement volume determines the time required for completing a measurement. The measurement volume is the volume formed by intersection of the flow of sampled air with the beam of light directed into the measurement chamber. If the particle concentration is to be monitored continuously, a higher flow rate will allow changes in particle concentration to be discovered more quickly.

Therefore, high flowrates are desirable for air sampling. However, the higher the flow rate the more difficult is detection of very fine particles, especially particles with diameters ranging from some hundred nanometers to one micrometer (submicron particles). The quantity of light which a given-sized particle will scatter while located in the measurement volume is inversely proportional to particle velocity (and thus flowrate) and proportional to particle size. Increasing the velocity of a particle by a factor of two (by doubling the flow rate) results in a halving of the time span in which the particle travels through the measurement volume, thereby decreasing the time span available for detecting the light scattered by the particle.

Semiconductor photodiodes nowadays generally used as sensors in particle counters, such as disclosed in US 4;571,079, exhibit increased capacitance with larger active areas. Large active areas increase sensitivity. On the other hand, increasing the capacitance results in a reduced response speed. Due to the shorter interaction time between particles while the particles traverse the measurement volume, higher particle velocities require an increased response speed from the photodetectors. Further, regardless of the actual size of the sensor, it is necessary to image the complete measurement volume onto the active area of the sensor. In order to keep the capacitance down and response speed up, the active areas of detector photodiodes are kept small thus requiring detection optics with a magnification of less than 1. I.e. the image on the active area of the detector is smaller than the area of projection of the measurement volume, which leads to reducing the amount of scattered light actually detected. As a result, the maximum flow rate allowing reasonably reliable detection of sub-micron particles is limited. Typically, commercially available particle counters operate at flow rates of 28,3 liters (one cubic foot) per minute.

In order to overcome the above limitation, it has been suggested in US 5,084,629 to provide a particle counter with apportionment of a sample gas flow into a plurality of partial gas flows with separate measurement volumes for each partial gas flow, each comprising its own light source, optics and sensors. Due to this parallelisation approach the flow rate of each partial gas flow is reduced, thus allowing reliable detection of submicron particles, but at the expense of significantly increasing complexity and thus costs of the overall appartus.

Due to limitations of the optical components, the flow path of the gas flow within a particle counter cannot be dimensioned freely to suit high flow rates. Therefore, additional problems that become increasingly important with higher flow rates are encountered when pumping the sample gas flow through the flow path. Positive displacement vacuum pumps often used for conventional particle counters are not efficient enough to allow portable design or battery powered operation of high flow rate particle counters.

Use of more efficient centrifugal blowers in particle counters has been suggested in US 5,515,164, which may be suitable for many applications. However, an efficient design using a centrifugal blower is expected to become increasingly difficult to implement at higher flow rates due to the increasing preassure drop which occurs with increasing flow rates for a given measurement chamber.

Use of lobe pumps in particle counters has been suggested in US 6,031,610, which may be also be suitable for many applications. However, due to pressure fluctuations at the pump input, there is the danger of instability of the gas flow inside the measurement chamber, as the pump is usually located downstream from the outlet of the measurement chamber.

The highest flow rates achieved by commercially available particle counters capable of detecting submicron particles are hardly higher than 50 liters per minute.

In view of the above, it is an object of the present invention to provide a particle counter for higher flow rates without jeopardizing reliability, sensitivity and accuracy of particle counts. Further, it is desirable to enable compact portable design of high flow rate particle counters.

According to one aspect of the present invention, this object is accomplished by providing a particle counter of the initially-mentioned type, wherein the pump is adapted to create a maximum flow of gas of at least 50 liters per minute through the particle counter, the product of the smallest diameter of the minimum aperture and the magnification of said optical system amounts to at least 2 mm, and the sensor means include a photomultiplier tube. Preferably, the detection optics have a minimum aperture with a smallest diameter of at least 2 mm and a magnification of 1 or greater than 1. Especially preferred is a minimum aperture with a smallest diameter of at least 2.5 mm and a magnification of at least 1.5. Even an aperture with a diameter of 8 mm is possible (and advantageous) implementing a photomultiplier tube. In this specification, the term "magnification" means absolute value of the magnification, i.e. optical systems inverting the image of the measurement volume (the intersection of the beam of light and the gas jet) are also considered to have a positive magnification. A magnification of more than 1 thus means an actual magnification (as opposed to optical reduction) regardless of the orientation of the image.

Preferably, the pump is adapted to create a maximum flow of gas surpassing the 56.6 liters (two cubic feet) per minute, which can be considered the limit of prior art sub-micron particle counters, or even 100 liters per minute.

The rather large aperture and/or magnification enable sufficient collection of scattered light even though there may be aberrations in the (detection side) optical system. At the same time, reaction speed of the sensor means is kept high due to use of a photomultiplier tube instead of a photodiode. Advantageously, implementation of the photomultiplier tube enables speeding up the detection electronics to deliver a rise time of less than 3 microseconds with an overall gain of more than 50 Megavolts per Watt, keeping signal-to-noise ratio within acceptable limits.

Advantageous embodiments of the present invention can be configured according to any of claims 2-14.

According to another aspect of the present invention, the underlying object is accomplished by use of a scroll pump for creating a flow of gas of at least 50 liters per minute through a particle counter, preferably a particle counter with a photomultpilier tube, said flow of gas carrying a particle load to be quantified by said particle counter.

Use of a scroll pump for creating the gas flow through a particle counter, which has previously neither been implemented nor suggested, results in several benefits. The working principle of scroll pumps based on two interleaving scrolls, one of which is moved in an orbiting manner relative to the other, allows for a very low friction design greatly improving pump efficiency. Further, the input flow of a scroll pump is very smooth thus helping to prevent flow instabilities in the measurement chamber.

It is to be noted that these advantages generally apply as well for use of scroll pumps in particle counters with lower flow rates and different sensor types, but for operation at the high flow rates permitted by measuring with a photomultiplier-tube (or, possibly, with a so called avalanche photodiode) efficient pump design is particularly important.

Generally, any of the embodiments described or options mentioned herein may be particularly advantageous depending on the actual conditions of application. Further, features of one embodiment may be combined with features of another embodiment as well as features known per se from the prior art as far as technically possible and unless indicated otherwise.

In particular, particle counters according to the present invention may be equipped with features known per se from the prior art, such as multi channel detection, digital measurement evaluation, electronic linking with networks and peripheral apparatus or the like.

The accompanying drawing, which is a schematic illustration and not drawn to scale, serves for a better understanding of the features of the present invention.
- Fig.: 1 illustrates the general setup of a particle counter according to a particularly advantageous embodiment of the present invention.

The particle counter 1 is equipped with a scroll pump 2 adapted to create a gas flow through the particle counter 1 with a maximum flow rate of 100 liters per minute. The scroll pump 2 functions due to the orbiting motion of a rotor scroll 3 relative to a stator scroll 4 and may be designed in principle like scroll pumps known from the prior art in connection with other appliances. The scroll pump 2 efficiently moves the particle laden air collected at the device inlet 5 through the particle counter 1. In order to improve reliability and ease of maintenance, the scroll pump 2 is driven by a brushless motor 22.

While other pump types such as lobe pumps and rotary vane pumps are suitable to deliver high flow rates with acceptable power consumption, use of a scroll pump is preferred due to very low pressure fluctuations at the pump inlet.

The particle laden flow of air enters the measurement chamber 6 through an inlet nozzle 7 and traverses a beam of light 8 created by a laser diode 9. Instead of a laser diode 9, other types of lasers, such as gas lasers or solid state lasers, or even incoherent light emitting devices, such as a condenser discharge lamp may be used. However, use of a laser diode 9 is preferred due to low costs, low power consumption and small dimensions of available laser diodes.

Light 10 scattered from particles entrained in the gas flow is collected by an optical system 11 with a (rectangular) minimum aperture of 2.5 mm by 5 mm and a magnification of 1.7. The product of the smallest diameter of the minimum aperture and the magnification thus amounts to 4.25 mm. Smaller apertures, such as 2 mm by 2 mm and smaller magnifications, such as 1, are also within the scope of the present invention, however, both sensitivity and accuracy of the particle counter are improved using a larger aperture and greater magnification, which is made possible by use of a photomultiplier tube.

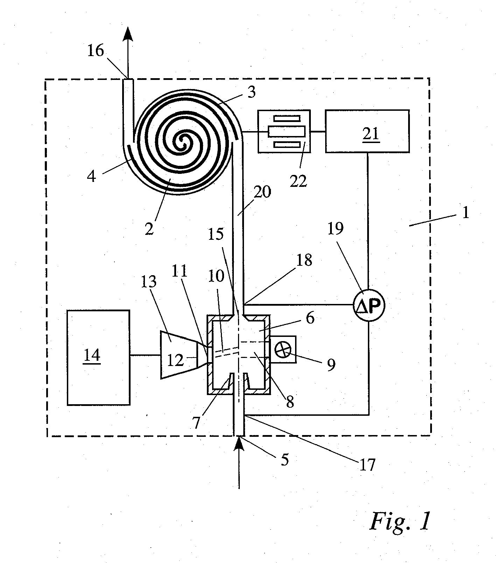

It is to be noted that, though the schematic view of fig. 1 shows both the beam of light 8 and the optical (detection) system 11 in the drawing plane, the optical axis of the beam of light 8 and the optical axis of the optical system 11 actually form an angle with each other. Typically, the optical axis of the optical system 11 is oriented in an angle between about 30 and 120 Degrees to the optical axis of the beam of light 8 and perpendicular to the flow direction of the flow of gas traversing the beam of light 8.

The optical system 11 images a projection of the measurement volume created by intersection of the gas flow and the beam of light 8 onto the active area 12 of the sensor module 13. The sensor module 13 contains a photomultiplier-tube (PMT) sealed together with a high-voltage supply, i.e. a circuit for converting the voltage of the power supply of the particle counter 1 into a higher voltage driving the photomultiplier-tube. The particle counter 1 may advantageously be battery powered to allow mobile operation thereof.

The detection electronics including the PMT are adapted to deliver a rise time of less than 3 microseconds with an overall gain of more than 50 Megavolts per Watt.

Instead of using sensor modules 13 including the high-voltage supply, separate components may also be used. However, use of self-contained PMT modules 13 simplify design of the particle counter 1. Further, sensor modules 13 may easily be exchanged in the case of damage. Due to implementation of the photomultiplier-tube sensitivity and response speed of the sensor module 13 are higher than sensitivity and response speed achievable with silicon or germanium photodiodes.

The sensor module 13 is connected with an electronic counter circuit 14 evaluating the output signal of the sensor module 13 in order to count the particles causing the light scattering in the measurement chamber 6. The results of particle counts performed over a predetermined period of time may be output using suitable output devices such as a display and/or a printer.

The gas flow leaving the measurement chamber 6 through the outlet 15 passes the pump 2 and is discharged through the exhaust 16. Not shown in fig. 1 are particle filters which may be positioned upstream and/or downstream of the scroll pump 2.

In order to control the flow rate of the gas flow through the particle counter 1, the pressure difference between a first location 17 upstream and a second location 18 downstream of the measurement chamber 6 is measured. This may either be achieved using a differential pressure sensor 19 or two separate pressure sensors. Instead of measuring the pressure difference upstream and downstream the measurement chamber 6, the pressure difference between two sides of any defined aperture in the gas duct of the particle counter 1 may be measured to determine the flow rate. The actual flow rate is calculated from the measured pressure difference using a calibration function or a table of calibration values in the control unit 21.

Though not preferred, other methods of measuring the gas flow rate are also suitable.

The control unit 21 controls the pump motor 22 to deliver a constant desired flow rate. The control unit may comprise an operation panel or other means allowing a user to select one of various flow rates.

Preferably, the control unit 21 and the counter circuit 14 are connected with each other, and parameter settings thereof may be made using a common user interface. In environments with high particle concentrations, the control unit 21 may automatically reduce the flow rate such that single particle counts can still be resolved.

## Claims

1. A particle counter comprising
- a pump (2) for creating a flow of gas through said particle counter, said flow of gas carrying a particle load to be quantified,
- a measurement chamber (6) having an inlet (7) through which said flow of gas enters said measurement chamber (6) and an outlet (15) through which said flow of gas exits said measurement chamber (6),
- a light source (9),
- means for directing a beam of light (8) emitted from said light source (9) into said measurement chamber (6) such that said beam of light (8) traverses said flow of gas,
- sensor means (13) for detecting light (10) scattered by said particle load, and
- an optical system (11) for imaging said scattered light (10) onto an active area (12) of said sensor means (13),
**characterized in that**
said pump (2) is adapted to create a maximum flow of gas of at least 50 liters per minute through said particle counter,
the product of the smallest diameter of the minimum aperture and the magnification of said optical system (11) amounts to at least 2 mm,
and said sensor means (13) include a photomultiplier tube.

2. The particle counter according to claim 1, wherein the product of the smallest diameter of the minimum aperture and the magnification of said optical system (11) amounts to at least 4 mm.

3. A particle counter according to any of the preceding claims, wherein said sensor means (13) are adapted to enable a rise time of less than 3 microseconds and an overall gain of at least 50 Megavolts per Watt

4. A particle counter according to any of the preceding claims, wherein said pump (2) is a scroll pump (2).

5. The particle counter according to claim 4, wherein said scroll pump (2) is driven by a brushless motor (22).

6. A particle counter according to claim 4 or claim 5, wherein said scroll pump (2) is battery powered.

7. A particle counter according to any of the preceding claims, further comprising means for determining the flow rate of said flow of gas, wherein said means for determining the flow rate include means (19) for determining the pressure difference between a first loaction (17) and a second location (18) of the flow path of said flow within said particle counter.

8. The particle counter according to claim 7, wherein said first location (17) is upstream of said inlet (7) and said second location (18) is downstream of said outlet (15).

9. The particle counter according to any of the preceding claims, wherein said photomultiplier tube is integrated in a module comprising a high voltage supply.

10. The particle counter according to any of the preceding claims, wherein said pump (2) is adapted to create a maximum flow of gas of at least 100 liters per minute through said particle counter.

11. A particle counter according to any of the preceding claims, wherein said measurement chamber (6) is a lense tube.

12. A particle counter according to any of the preceding claims, wherein said light source (9) is a laser light source (9).

13. A particle counter according to claim 12, wherein said light source (9) includes a laser diode.

14. A particle counter according to any of the preceding claims, wherein said particle counter is portable.

15. Use of a scroll pump (2) for creating a flow of gas of at least 50 liters per minute through a particle counter, said flow of gas carrying a particle load to be quantified by said particle counter.
